(19) Europäisches Patentamt
European Patent Office
Office européen des brevets

(11) **EP 3 163 649 B1**

(12) **EUROPEAN PATENT SPECIFICATION**

(45) Date of publication and mention
of the grant of the patent:
**27.03.2019 Bulletin 2019/13**

(21) Application number: **15814214.1**

(22) Date of filing: **10.06.2015**

(51) Int Cl.:
*H01M 2/10* (2006.01)      *H01M 10/04* (2006.01)
*G01D 5/14* (2006.01)      *H01M 10/48* (2006.01)
*G01B 7/24* (2006.01)

(86) International application number:
**PCT/JP2015/066754**

(87) International publication number:
**WO 2016/002454 (07.01.2016 Gazette 2016/01)**

(54) **SENSOR FOR DETECTING DEFORMATION OF SEALED SECONDARY BATTERY, SEALED SECONDARY BATTERY, AND METHOD FOR DETECTING DEFORMATION OF SEALED SECONDARY BATTERY**

SENSOR ZUR DETEKTION DER VERFORMUNG EINER VERSCHLOSSENEN SEKUNDÄRBATTERIE, VERSCHLOSSENE SEKUNDÄRBATTERIE UND VERFAHREN ZUR DETEKTION DER VERFORMUNG EINER VERSCHLOSSENEN SEKUNDÄRBATTERIE

CAPTEUR POUR LA DETECTION DE DEFORMATION DE BATTERIE SECONDAIRE ETANCHE, BATTERIE SECONDAIRE ETANCHE, ET PROCEDE POUR LA DETECTION DE DEFORMATION DE BATTERIE SECONDAIRE ETANCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014   JP 2014134509**
**19.11.2014   JP 2014234466**

(43) Date of publication of application:
**03.05.2017   Bulletin 2017/18**

(73) Proprietor: **Toyo Tire & Rubber Co., Ltd.**
**Hyogo 664-0847 (JP)**

(72) Inventors:
• **FUKUDA,Takeshi**
**ITAMI-SHI**
**HYOGO 664-0847 (JP)**
• **OHTA,Takahiro**
**ITAMI-SHI**
**HYOGO 664-0847 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(56) References cited:
**WO-A1-2012/073770      WO-A1-2012/073770**
**WO-A1-2014/061684      WO-A1-2014/061684**
**JP-A- S5 939           JP-A- 2002 294 149**
**JP-A- 2008 234 840      JP-A- 2013 195 331**
**US-A1- 2006 246 345**

EP 3 163 649 B1

**EP 3 163 649 B1**

**Description**

TECHNICAL FIELD

The present invention relates to a sensor for detecting a deformation of a sealed secondary battery, a sealed secondary battery to which the sensor is fitted, and a method for detecting a deformation of a sealed secondary battery.

BACKGROUND ART

In recent years, a sealed secondary battery (hereinafter referred to merely as a "secondary battery" also), a typical example thereof being a lithium ion secondary battery, has been used not only in any mobile instrument such as a portable telephone or notebook personal computer, but also as a power source for any electric motor car such as an electric vehicle or a hybrid car.

Cells constituting a secondary battery each have a group of electrodes that is obtained by winding or stacking a positive electrode and a negative electrode onto each other to interpose a separator therebetween, and an external packaging body in which the electrode group is held. In general, a laminated film, or a metallic can is used as the external packaging body, and the electrode group is held together with an electrolytic solution in a sealed space in the external packaging body.

A secondary battery is used in the form of a battery module or a battery pack including a plurality of cells in an article for which a high-voltage is required, such as a power source for the above-mentioned electric motor cars. In the battery module, a plurality of cells connected to each other in series are held in a package. For example, four cells are connected to each other in the form of two parallel-form-connected lines each made of two-serially-connected-ones of the cells, or in series of the four cells.

In such a battery pack, various devices such as a controller, together with plural battery modules connected in series to each other, are held in a package. In a secondary battery used in a power source for an electric motor car, a package for its battery pack is made into a shape suitable for being mounted into a vehicle.

Such a secondary battery has the following problem: when its electrolytic solution is decomposed by overcharge or some other, the pressure inside the secondary battery is raised by a decomposition gas from the solution; and with the raise, its cells swell so that the secondary battery is deformed. In this case, when the charging current or the discharge current is not stopped, the secondary battery ignites.

As a worse result thereof, the secondary battery is burst. It is therefore important for a prevention of the bursting of a secondary battery to detect, with a high sensitivity, a deformation of the secondary battery on the basis of a swell of its cells in such a manner that the charging current or the discharge current can be stopped at an appropriate time.

In order to fit, into a battery module having a plurality of cells, a temperature sensor for detecting the temperature of the cells, Patent Document 1 describes a method of forming a sensor-inserting space inside the battery module. However, according to such a method making use of a temperature sensor, a space where the sensor is placed is separately located; consequently, the volume of the secondary battery is made smaller than required.

Moreover, Patent Document 2 describes a method of bonding a strain gauge onto a surface of a case (an example of an external packaging body) for cells of a secondary battery, and detecting a change in the resistance value of the strain gauge in accordance with a swell of the case to decrease a charging current for the secondary battery or a discharge current therefrom.

However, according to such a method making use of a strain gauge, particularly, in a long-term use of the secondary battery, the strain gauge is shifted out of position by vibration. By the shift or others, properties of the sensor are varied so that the properties may be unfavorably lowered in stability.

Patent Document 3 discloses a tactile and bending sensor which includes a magnetic filler incorporated into an elastomer. In this sensor, a magnetic change is caused by deformation of the elastomer due to touching, which is then detected. As the elastomer Patent Document 3 mentions polyurethane and silicone type elastomers.

PRIOR ART DOCUMENTS

PATENT DOCUMENTS

Patent Document 1: JP 2013-171 697 A
Patent Document 2: JP 2006-128 062 A
Patent Document 3: US 2015/253207 A1

## SUMMARY OF THE INVENTION

### PROBLEMS TO BE SOLVED BY THE INVENTION

The above-mentioned secondary batteries may be used in various temperature environments. Thus, it is necessary to restrain the sensitivity of sensors therefor from being lowered not only at an ordinary temperature but also at a low temperature and a high temperature, respectively. Accordingly, in the case of using, for example, a deformation of a secondary battery as an index to analyze the state of the battery, the deformation of the secondary battery on the basis of a swell of its cells is required to be detectable with a high sensitivity in a wide temperature region in the actual situation.

In light of the actual situation, the present invention has been made, and an object thereof is to provide a sensor for detecting a deformation of a sealed secondary battery in which the deformation of the sealed secondary battery based on a swell of its cell or cells is detectable with a high sensitivity in a wide temperature region; a sealed secondary battery; and a method for detecting a deformation of a sealed secondary battery.

### MEANS FOR SOLVING THE PROBLEMS

The object can be attained by the present invention, as described hereinafter. The present invention provides a sensor, for detecting a deformation of a sealed secondary battery, comprising a polymer matrix layer and a detection unit, wherein the polymer matrix layer comprises a filler dispersed in the layer and adapted to cause a change to an external field in accordance with a deformation of the polymer matrix layer, and the detection unit detects the change of the external field; and the polymer matrix layer has a glass transition temperature (Tg) of -30 °C or lower.

The polymer matrix layer is fitted to the battery to be sandwiched, for example, between cells of the battery that are adjacent to each other, or between a cell thereof and a package held in the cell. Alternatively, the polymer matrix layer is fitted thereto between a package for a battery module included in a battery pack, and a package for a battery module adjacent to the former battery module.

Furthermore, the polymer matrix layer is fitted thereto to be sandwiched between the package for one of the battery modules and a package for the battery pack inside a cavity between these packages. In any one of these cases, the polymer matrix layer may be fitted thereto in a state of being compressed.

When the secondary battery is deformed by a swell of the cell or cells, the polymer matrix layer is deformed accordingly. The detection unit detects a change of an external field which follows the deformation of the polymer matrix layer. In this way, the deformation of the secondary battery is detectable with a high sensitivity. The polymer matrix layer fitted as described above does not make the volume of the secondary battery small, and further this layer is restrained from being shifted out of position by vibration or some other. As a result, properties of the sensor are made stable.

Regarding the polymer matrix layer, which constitutes the sensor according to the present invention for detecting a deformation of a sealed secondary battery, the glass transition temperature (Tg) thereof is set, particularly, to -30 °C or lower. This makes a change in the elastic modulus of the polymer matrix layer small at a low temperature and a high temperature, equivalent to an ordinary temperature, which makes it possible to detect, with a high sensitivity, the deformation of the sealed secondary battery, based on a swell of the cell or cells, in a wide temperature range.

In the sensor according to the present invention for detecting a deformation of a sealed secondary battery the polymer matrix layer comprises a magnetic filler as the filler, and the detection unit detects a change of a magnetic field as the external field. This structure makes it possible to detect the change of the magnetic field, which follows the deformation of the polymer matrix layer, without using any wiring. Moreover, Hall elements, which have a wide sensitive region, are each usable as the detection unit, so that the high-sensitivity detection can be attained in a wider range.

In the sensor for detecting a deformation of a sealed secondary battery, it is preferred as to the polymer matrix layer that the ratio [E'(20°C/-20°C)] of the storage modulus thereof at 20 °C [E'(20 °C)] to that at -20 °C [E'(-20 °C)] is 0.2 or more, and further the ratio [E'(20°°C/60 °C)] of the storage modulus thereof at 20 °C [E'(20 °C)] to that at 60 °C [E'(60 °C)] is 5 or less. This structure makes it possible to make a change in the elastic modulus of the polymer matrix layer small at low temperature and high temperature, equivalently to ordinary temperature. Thus, with a higher certainty, the deformation of the sealed secondary battery, which is based on a swell of the cell or cells, is detectable with a high sensitivity in a wide temperature range.

In the sensor for detecting a deformation of a sealed secondary battery, it is preferred regarding the polymer matrix layer that the storage modulus thereof at 20 °C [E'(20 °C)] is 5.0 MPa or less. In this case, the polymer matrix layer has an appropriate elastic modulus so that the deformation of the sealed secondary battery is detectable with a higher sensitivity.

In the sensor for detecting a deformation of a sealed secondary battery, the polymer matrix layer is a polyurethane elastomer obtained by causing an active-hydrogen-containing compound to react with an isocyanate component, and the active-hydrogen-containing compound is a compound comprising a silicone-containing polyol. This is because the deformation of the sealed secondary battery, which is based on a swell of the cell(s), comes to be detectable with a high sensitivity in a wide temperature range while the Tg of the polymer matrix layer is adjusted into a desired range.

In the sensor for detecting a deformation of a sealed secondary battery, it is preferred that the silicone-containing polyol has a number-average molecular weight (Mn) of 1000 to 5000, and the content of the silicone-containing polyol in the polymer matrix layer is from 20 to 80 % by weight. This case favorably makes it possible to detect the deformation of the sealed secondary battery, which is based on a swell of the cell or cells, with a higher sensitivity in a wide temperature range. In the present invention, the "silicone content by percentage" can be calculated out in accordance with the following equation:

$$\text{silicone content by percentage (\% by weight)}$$
$$= \text{``reactive silicone weight (g)''}/\text{``entire resin component amount (g)''} \times 100,$$

wherein the "entire resin component amount" denotes that the amount of the whole of the layer from which the filler component amount is extruded, and further denotes the following:

$$\text{the ``entire resin component amount (g)''}$$
$$= \text{``the weight (g) of the polymer matrix layer''} - \text{``the weight (g) of the filler(s)''}.$$

The sealed secondary battery according to the present invention is a sealed secondary battery to which the above-mentioned deformation detecting sensor is fitted. The form thereof may be a single battery module, or a battery pack including plural battery modules. In this sealed secondary battery, a deformation based on a swell of its cell or cells is detected with a high sensitivity through the deformation detecting sensor. In addition, the deformation detecting sensor does not make the volume of the secondary battery small to make properties of the sensor stable.

The method according to the present invention provides a method for detecting a deformation of a sealed secondary battery, wherein: a polymer matrix layer is fitted into a cavity which the sealed secondary battery has; the polymer matrix layer comprises a filler dispersed in this layer and giving a change to an external field in accordance with a deformation of the polymer matrix layer, and the polymer matrix layer has a glass transition temperature (Tg) of -30 °C or lower; and the change of the external field, which follows the deformation of the polymer matrix layer, is detected, and on the basis of the detection, the deformation of the sealed secondary battery is detected.

The polymer matrix layer is fitted into the cavity, which the sealed secondary battery has. When the secondary battery is deformed by a swell of its cell or cells, the polymer matrix layer is deformed accordingly. By detecting the change of the external field in accordance with the deformation of the polymer matrix layer, the deformation of the secondary battery is detectable with a high sensitivity. In the present invention, the glass transition temperature (Tg) of the polymer matrix layer is set, particularly, to -30 °C or lower; thus, the deformation of the sealed secondary battery, which is based on a swell of the cell or cells, is detectable with a high sensitivity in a wide temperature region.

In the method according to the present invention for detecting a deformation of a sealed secondary battery, it is preferred that the polymer matrix layer is fitted to the cavity, which the sealed secondary battery has, in a state that the polymer matrix layer is sandwiched in the cavity to be compressed. The polymer matrix layer fitted in this way does not make the volume of the secondary battery small, and further the layer is restrained from being shifted out of position by vibration or some other. Consequently, properties of the sensor are made stable.

BRIEF DESCRIPTION OF THE DRAWINGS

FIG. 1    is a perspective view illustrating an example of a battery module schematically.

FIG. 2    is a sectional view illustrating the module on line A-A in FIG. 1 schematically when the module is viewed in an arrow direction.

FIG. 3    is a sectional view illustrating a different example of a site of a battery to which a polymer matrix layer is bonded.

MODE FOR CARRYING OUT THE INVENTION

Hereinafter, an embodiment of the present invention will be described.

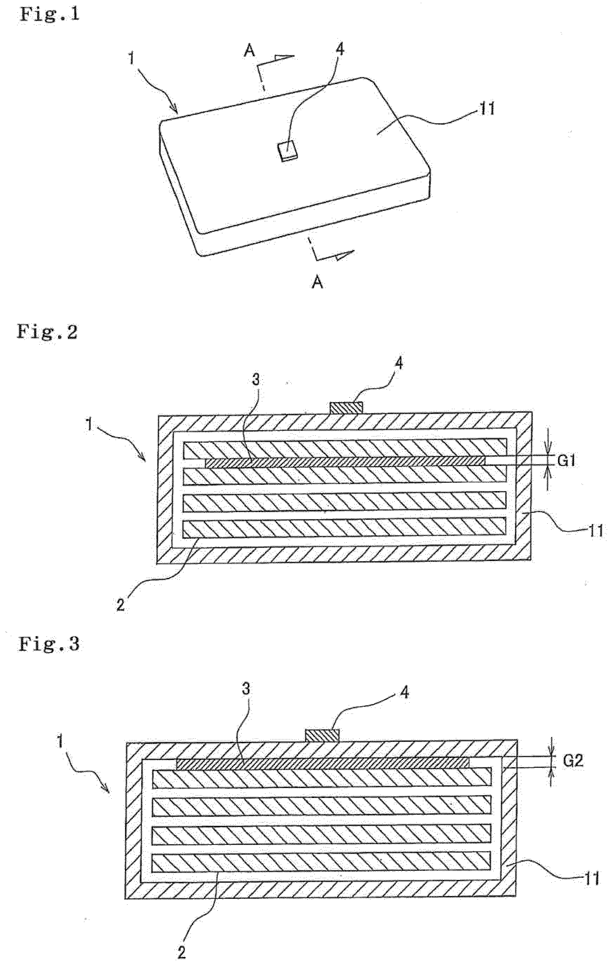

A battery module 1 illustrated in FIGS. 1 and 2 has, inside its package 11, a plurality of cells 2. In the present embodiment, the cells, the number of which is four, are connected in series to each other (for example, in the form of two parallel-form-connected lines each made of two-serially-connected-ones of the cells, or in series of the four cells). The cells 2 each have a group of electrodes which is produced by winding or stacking a positive electrode and a negative electrode onto each other to interpose a separator therebetween, and an external packaging body in which the electrode group is held, this situation being not illustrated in detail.

In a sealed space of the inside of the external packaging body, the electrode group is held together with an electrolytic solution. For an external packaging body of each of the cells 2, a laminated film, such as an aluminum laminated foil piece, is used. Instead of this film, however, a circular or rectangular tube type metallic can may be used.

This battery module 1 is a lithium secondary battery usable as a power source for electric motor cars. Such battery modules are made in the form of a battery pack to be mounted into a car. The battery module 1 and the same battery module or modules 1 connected in series to each other are held, together with various devices such as a controller, in a package.

The package for the battery pack is made into a shape suitable for being mounted into the car, for example, a shape matched with the shape of a space below the floor of the car. In the present invention, the sealed secondary battery is not limited to any non-aqueous electrolytic solution secondary battery such as a lithium ion battery, and may be an aqueous electrolytic solution secondary battery such as a nickel-hydrogen battery.

As illustrated in FIG. 2, a deformation detecting sensor is fitted to the sealed secondary battery. The deformation detecting sensor has a polymer matrix layer 3 and a detection unit 4. The polymer matrix layer 3 is bonded onto a surface of one of the cells 2 (outer surface of an external packaging body therefor). For the bonding, an adhesive or an adhesive tape is used as needed.

The polymer matrix layer 3 is made into a sheet form, and is located in a cavity of the secondary battery, for example, a gap between adjacent two of the cells 2, or as illustrated in FIG. 3, the layer 3 is located between one of the cells 2 and a package 11 in which the cells 2 are held. The polymer matrix layer 3 may be bent to be bonded to a corner of any one of the cells 2, or a corner of the package 11.

The polymer matrix layer 3 contains a filler dispersed in this layer and giving a change to an external field in accordance with a deformation of the polymer matrix layer 3. The detection unit 4 detects the change of the external field. The detection unit 4 is arranged apart from the polymer matrix layer 3 to such an extent that the change of the external field is detectable, and is preferably bonded to a site of the battery which is relatively strong not to receive an effect of a swell of the cells 2 easily.

In the present embodiment, the detection unit 4 is bonded to an outer surface of the package 11. However, the present invention is not limited to this form. Thus, the detection unit 4 may be bonded to an inner surface of the package 11 or a package for the battery pack. Such a package is made of, e.g., a metal or plastic material. For the package for each of the battery modules, a laminated film may be used.

The polymer matrix layer 3 illustrated in FIG. 2 is fitted into the cavity to be sandwiched in a compressed state. The thickness of the polymer matrix layer 3 in a non-compressed state is larger than the cavity that is a gap G1 in which this layer is located. The polymer matrix layer 3 is compressed into the thickness direction. The polymer matrix layer 3 illustrated in FIG. 3 is also fitted into the cavity to be sandwiched in a compressed state.

In this example, this layer is fitted into the cavity between one of the cells 2 and the package 11 to be sandwiched therebetween in a compressed state. The thickness of this polymer matrix layer 3 in a non-compressed state is larger than the cavity that is a gap G2 in which this layer is located. The polymer matrix layer 3 is also compressed into the thickness direction.

When the cells 2 swell, the polymer matrix layer 3 is deformed accordingly. The detection unit 4 detects a change of the external field which follows the deformation of the polymer matrix layer 3. A detection signal output from the detection unit 4 is sent to a control unit, not illustrated. When it is detected through the detection unit 4 that the external field change is a change of a set value or more, a switching circuit connected to the control unit and not illustrated cuts off the passage of electric current to stop the charging current or discharge current.

In this way, the deformation of the secondary battery, which is based on the swell of the cells 2, is detected with a high sensitivity to prevent the secondary battery from being burst. This deformation detecting sensor does not make the volume of the secondary battery small; thus, the sensor is restrained from being shifted out of position to stabilize properties of the sensor.

In the example in each of FIGS. 2 and 3, the single polymer matrix layer 3 and the single detection unit 4 have been illustrated. However, a plurality of polymer matrix layers and a plurality of detection units may be used in accordance with the shape and size of the secondary battery, and other conditions. At this time, the polymer matrix layer 3 located as illustrated in FIG. 2 and the polymer matrix layer 3 located as illustrated in FIG. 3 may be together located. Furthermore, a plurality of polymer matrix layers 3 may be located to the same single cell 2, or a plurality of detection units 4 may detect a change of the external field which follows a change of the same polymer matrix layer 3.

In the present embodiment, the polymer matrix layer 3 contains a magnetic filler as the above-mentioned filler, and the detection unit 4 detects a change of a magnetic field as the external field. In this case, the polymer matrix layer 3 is a magnetic elastomer layer in which a magnetic filler is dispersed in a matrix made of an elastomer component.

Examples of the magnetic filler include rare earth based, iron based, cobalt based, nickel based, and oxide based fillers. The rare earth based fillers, which give a higher magnetic force, are preferred. The shape of the magnetic filler is not particularly limited, and may be any one of the following: spherical, flat, needle, columnar and indeterminate shapes.

The average particle diameter of the magnetic filler is preferably from 0.02 to 500 $\mu$m, more preferably from 0.1 to 400 $\mu$m, even more preferably from 0.5 to 300 $\mu$m. If the average particle diameter is less than 0.02 $\mu$m, the magnetic filler tends to be lowered in magnetic properties. If the average particle diameter is more than 500 $\mu$m, the magnetic elastomer layer tends to be lowered in mechanical properties to become brittle.

The magnetic filler may be introduced into the elastomer after being magnetized. Preferably, the magnetic filler is introduced into the elastomer and subsequently magnetized. The magnetization after the introduction into the elastomer makes it easy to control the polarity of the magnet, so that the detection of the magnetic field is made easy.

The polymer matrix layer, which constitutes the deformation detecting sensor according to the present invention, is characterized by having a glass transition temperature (Tg) of -30 °C or lower. In order for the sensor to detect a deformation of the sealed secondary battery by a swell of its cell or cells with a high sensitivity in a wide temperature range, it is preferred regarding the polymer matrix layer that the ratio [E'(20 °C/-20 °C)] of the storage modulus thereof at 20 °C [E'(20 °C)] to that at -20 °C [E'(-20 °C)] is 0.2 or more, and further the ratio [E'(20 °C/60 °C)] of the storage modulus thereof at 20 °C [E'(20 °C)] to that at 60 °C [E'(60 °C)] is 5 or less.

In order that the polymer matrix layer can be made appropriate in elastic modulus and the sensor can detect the deformation of the sealed secondary battery with a higher sensitivity, it is preferred regarding the polymer matrix layer that the storage modulus thereof at 20 °C [E'(20 °C)] is 5.0 MPa or less.

As the polymer matrix, an elastomer component is used which is polyurethane rubber (referred to also as polyurethane elastomer).

The polyurethane elastomer is obtained by causing an active-hydrogen-containing compound to react with an isocyanate component. The active-hydrogen-containing compound and the magnetic filler are mixed with each other and the isocyanate component is blended into the mixture to yield a mixed liquid.

The mixed liquid may be obtained by blending the magnetic filler into the isocyanate component and then blending the active-hydrogen-containing compound into the resultant mixture. This mixed liquid is cast into a mold subjected to release treatment, and subsequently the mixed liquid is heated to the curing temperature thereof to be cured. In this way, the magnetic elastomer can be produced.

An isocyanate component usable for the polyurethane elastomer may be a compound known in the field of polyurethane. Examples thereof include aromatic diisocyanates such as 2,4-toluene diisocyanate, 2,6-toluene diisocyanate, 2,2'-diphenylmethane diisocyanate, 2,4'-diphenylmethane diisocyanate, 4,4'-diphenylmethane diisocyanate, 1,5-naphthalene diisocyanate, p-phenylene diisocyanate, m-phenylene diisocyanate, p-xylylene diisocyanate and m-xylylene diisocyanate; aliphatic diisocyanates such as ethylene diisocyanate, 2,2,4-trimethylhexamethylene diisocyanate and 1,6-hexamethylene diisocyanate; and alicyclic diisocyanates such as 1,4-cyclohexane diisocyanate, 4,4'-dicyclohexylmethane diisocyanate, isophorone diisocyanate and norbornane diisocyanate.

These may be used singly or in the form of a mixture of two or more thereof. The isocyanate component may be a modified component such as a urethane modified, allophanate modified, biuret modified or isocyanurate modified component. The isocyanate component is preferably 2,4-toluene diisocyanate, 2,6-toluene diisocyanate, 4,4'-diphenylmethane diisocyanate, and is more preferably 2,4-toluene diisocyanate, or 2,6-toluene diisocyanate.

The active-hydrogen-containing compound may be an active-hydrogen-containing compound used ordinarily in a technique field of polyurethane. In the present invention, a silicon-containing polyol is used as the active-hydrogen-containing compound since this case makes it easy to set the glass transition temperature (Tg) of the polymer matrix layer, particularly, to -30 °C or lower, and further makes a change in the elastic modulus of the polymer matrix layer small at any one of a low temperature and a high temperature, equivalently to ordinary temperature. The silicone-containing polyol is a polyol having, at a terminal thereof, at least one active hydrogen radical and further having, at a main chain or side chain thereof, a silicone moiety (Si-O-Si).

The present invention can make use of any one of the polyol having at a main chain thereof a silicone moiety, and the polyol having at a side chain thereof a silicone moiety. The former polyol, which has at a main chain thereof a silicone moiety, is more preferred since the polyol does not easily undergo phase separation in the polyurethane elastomer to keep the bondability of the finally obtained polymer matrix easily.

For the silicone-containing polyol used as the active-hydrogen-containing compound, the number-average molecular weight is preferably from 1000 to 5000. The content of the silicone-containing polyol in the polymer matrix layer is preferably from 20 to 80 % by weight of the layer.

The active-hydrogen-containing compound in the present invention may include a compound known in the field of polyurethane, in addition to the silicone-containing polyol. Examples thereof include polyether polyols, typical examples thereof being polytetramethylene glycol, polypropylene glycol, polyethylene glycol, and any copolymer made from propylene oxide and ethylene oxide; polyester polyols, typical examples thereof being polybutylene adipate, polyethylene adipate, and 3-methyl-1,5-pentaneadipate; polyester polycarbonate polyols, examples thereof being reactants each made from a polyester glycol such as polycaprolactone polyol or polycaprolactone, and an alkylene carbonate; polyester polycarbonate polyols each obtained by causing ethylene carbonate to react with a polyhydric alcohol, and next causing the resultant reaction mixture to react with an organic dicarboxylic acid; polycarbonate polyols each obtained by interesterification reaction between a polyhydroxyl compound and an arylcarbonate; and other high-molecular-weight polyols. These may be used singly or in any combination of two or more thereof.

Besides these high-molecular-weight polyols, the following may be used as additional active-hydrogen-containing compound: ethylene glycol, 1,2-propylene glycol, 1,3-propylene glycol, 1,4-butanediol, 1,6-hexanediol, neopentyl glycol, 1,4-cyclohexanedimethanol, 3-methyl-1,5-pentanediol, diethylene glycol, triethylene glycol, 1,4-bis(2-hydroxyethoxy)benzene, trimethylolpropane, glycerin, 1,2,6-hexanetriol, pentaerythritol, tetramethylolcyclohexane, methyl glucoside, sorbitol, mannitol, dulcitol, sucrose, 2,2,6,6-tetrakis(hydroxymethyl)cyclohexanol, triethanolamine, and other low-molecular-weight polyol components; and ethylenediamine, tolylenediamine, diphenylmethanediamine, diethylenetriamine, and other low-molecular-weight polyamine components.

These may be used singly or in any combination of two or more thereof. Furthermore, the following may be blended thereinto: 4,4'-methylenebis(o-chloroaniline) (MOCA), 2,6-dichloro-p-phenylenediamine, 4,4'-methylenebis(2,3-dichloroaniline), 3,5-bis(methylthio)-2,4-toluenediamine, 3,5-bis(methylthio)-2,6-toluenediamine, 3,5-diethyltoluene-2,4-diamine, 3,5-diethyltoluene-2,6-diamine, trimethylene glycol-di-p-aminobenzoate, polytetramethylene oxide-di-p-aminobenzoate, 1,2-bis(2-aminophenylthio)ethane, 4,4'-diamino-3,3'-diethyl-5,5'-dimethyl diphenylmethane, N,N'-di-sec-butyl-4,4'-diaminodiphenylmethane, 4,4'-diamino-3,3'-diethyldiphenylmethane, 4,4'-diamino-3,3'-diethyl-5,5'-dimethyldiphenylmethane, 4,4'-diamino-3,3'-diisopropyl-5,5'-dimethyldiphenylmethane, 4,4'-diamino-3,3',5,5'-tetraethyldiphenylmethane, 4,4'-diamino-3,3',5,5'-tetraisopropyldiphenylmethane, m-xylylenediamine, N,N'-di-sec-butyl-p-phenylenediamine, m-phenylenediamine, p-xylylenediamine, and other polyamines. Regarding the additional active-hydrogen-containing compound, preferred are polytetramethylene glycol, polypropylene glycol, any copolymer made from propylene oxide and ethylene oxide, 3-methyl-1,5-pentane adipate, and more preferred are polypropylene glycol, and any copolymer made from propylene oxide and ethylene oxide.

The NCO index of the polyurethane elastomer is preferably from 0.3 to 1.2, more preferably from 0.5 to 1.1, even more preferably from 0.7 to 1.05. If the NCO index is less than 0.3, the magnetic elastomer tends to be insufficiently cured. If the NCO index is more than 1.2, the polymer matrix layer becomes high in elastic modulus so that the sensor sensitivity tends to be lowered.

The amount of the magnetic filler in the magnetic elastomer is preferably from 1 to 450 parts by weight, more preferably from 2 to 400 parts by weight for 100 parts by weight of the elastomer component. If this amount is less than 1 part by weight, the sensor tends not to detect a change of the magnetic field easily. If the amount is more than 450 parts by weight, the magnetic elastomer itself may become brittle.

The detection unit 4 for detecting a change of the magnetic field can make use of, for example, a magnetoresistive element, a Hall element, an inductor, an MI element, a flux gate sensor or some other. Examples of the magnetoresistive element include semiconductor compound magnetoresistive elements, anisotropic magnetoresistive elements (AMRs), giant magnetoresistive elements (GMRs), and tunnel magnetoresistive elements (TMRs). Out of these examples, a Hall element is preferred. This element is useful for the detection unit 4 that is a unit having a high sensitivity in a wide range.

The thickness of the polymer matrix layer 3 in a non-compressed state is preferably from 300 to 3000 $\mu$m, more preferably from 400 to 2000 $\mu$m, even more preferably from 500 to 1500 $\mu$m. If the thickness is less than 300 $\mu$m, this layer tends to be deteriorated in handleability when an attempt is made for adding the filler to the layer in a necessary amount. In the meantime, if the thickness is more than 3000 $\mu$m, the polymer matrix layer 3 is excessively compressed when the layer is located in the cavity as described above, so that the layer may not deform easily to lower the sensor sensitivity.

The polymer matrix layer 3 may be a non-foamed body, which does not contain any foam. The layer 3 may be a foamed body to heighten the layer in stability and the sensor in sensitivity, and further lighten the sensor. The foamed body may be an ordinary resin foam. The foamed body is preferably a thermosetting resin foam, considering the compressive permanent set and other properties thereof. The thermosetting resin foam includes a polyurethane resin foam. For the polyurethane resin foams, the isocyanate components and active-hydrogen-containing compound described above are usable.

As a catalyst used for any one of the polyurethane resin foams, a known catalyst is usable without being limited. The catalyst may be a tertiary amine catalyst such as triethylenediamine(1,4-diazabicylo[2,2,2]octane), N,N,N',N'-tetramethylhexanediamine or bis(2-dimethylaminoethyl)ether; or a metallic catalyst such as tin octylate, lead octylate, zinc octylate or bismuth octylate. These may be used singly or in any combination of two or more thereof.

Examples of a commercially available product of the catalyst include products "TEDA-L33" manufactured by Toso Co., Ltd., "NIAX CATALYST AI" manufactured by Momentive Performance Materials Inc., "KAORIZER NO. 1" and "KAORIZER NO. 30P" manufactured by Kao Corp., "DABCO T-9" manufactured by Air Products and Chemicals, Inc.,

"BTT-24" manufactured by Toei Chemical Industry Co., Ltd., and "PUCAT 25" manufactured by Nihon Kagaku Sangyo Co., Ltd.

A foam stabilizer used in the polyurethane resin foam may be, for example, a foam stabilizer used to produce an ordinary polyurethane resin foam, such as a silicone foam stabilizer or a fluorine-contained foam stabilizer. A silicone surfactant or a fluorine-contained surfactant used in the silicone foam stabilizer or the fluorine-contained foam stabilizer has, in a molecule thereof, a moiety soluble in a polyurethane type material and a moiety insoluble therein, and the insoluble moiety is uniformly dispersed in the polyurethane type material to lower the surface tension of the polyurethane type material. In this way, foam is easily generated in the polyurethane type material to cause this material not to be easily cracked. Of course, if the surface tension is excessively lowered, foam is not easily generated. When, for example, the silicone surfactant is used in the resin foam in the present invention, its dimethylpolysiloxane structure as the insoluble moiety makes it possible to make the diameter of bubbles in the foam small and make the number of the bubbles large.

Examples of a commercially available product of the silicone foam stabilizer include products "SF-2962", "SRX 274DL", "SF-2965", "SF-2904", "SF-2908", "SF-2904" and "L5340" manufactured by Dow Corning Toray Co., Ltd., and "Tegostab (registered trademark) B8017, B-8465 and B-8443" manufactured by Evonik Degussa gmbh. Examples of a commercially available product of the fluorine-contained foam stabilizer include products "FC430" and "FC4430" manufactured by 3M Company, and "FC142D", "F552", "F554", "F558", "F561" and "R41" manufactured by DIC Corp.

The blend amount of the foam stabilizer is preferably from 1 to 15 parts by mass, more preferably from 2 to 12 parts by mass for 100 parts by mass of the resin component. If the blend amount of the foam stabilizer is less than 1 part by mass, the material to be foamed is not sufficiently foamed. If the amount is more than 15 parts by mass, the foam stabilizer may bleed out.

The bubble content in the foam, which forms the polymer matrix layer 3, is preferably from 20 to 80 % by volume. When the bubble content is 20 % or more by volume, the polymer matrix layer 3 is soft to be easily deformed so that the sensor sensitivity is satisfactorily enhanced.

When the bubble content is 80 % or less by volume, the polymer matrix layer 3 is restrained from becoming brittle to be heightened in handleability and stability. Regarding the bubble content, the specific gravity of the foam is measured in accordance with JIS Z-8807-1976, and then from this value and the value of the specific gravity of the corresponding non-foamed product, the bubble content is calculated out.

The average bubble diameter of the foam, which forms the polymer matrix layer 3, is preferably from 50 to 300 $\mu$m. The average opening size of the foam is preferably from 15 to 100 $\mu$m. If the average bubble diameter is less than 50 $\mu$m or the average opening size is less than 15 $\mu$m, the sensor property tends to be deteriorated in stability by an increase in amount of the foam stabilizer. If the average bubble diameter is more than 300 $\mu$m or the average opening size is more than 100 $\mu$m, the contact area between the layer 3 and, e.g., the cell that is a target to be detected is decreased so that the sensor property tends to be deteriorated in stability.

Regarding the average bubble diameter and the average opening size, a cross section of the polymer matrix layer is observed through an SEM at a magnifying power of 100, and then an image analyzing software is used to measure, about the resultant image, the respective bubble diameters of entire bubbles present in an arbitrarily-selected area of the cross section, and the respective opening sizes of entire open cells present therein. As the average of these bubble diameters and that of these opening sizes, the target values are gained, respectively.

The closed cell percentage of the foam, which forms the polymer matrix layer 3, is preferably from 5 to 70 %. In this case, the sensor property can exhibit an excellent stability while the polymer matrix layer 3 surely keeps compressibility. The fraction by volume of the filler (magnetic filler in the present embodiment) in the foam, which forms the polymer matrix layer 3, is preferably from 1 to 30 % by volume.

The polyurethane resin foam can be produced by a method for producing an ordinary polyurethane resin foam except that the magnetic filler is incorporated into the resin. A method for producing the magnetic-filler-containing polyurethane resin foam includes, for example, the following steps (i) to (v):

(i) the step of producing an isocyanato-group-containing urethane prepolymer from a polyisocyanate component and an active hydrogen component,
(ii) a primary stirring step of mixing the isocyanato-group-containing urethane prepolymer, a foam stabilizer, a catalyst and a magnetic filler with each other, stirring these components preliminarily to be stirred vigorously in such a manner that the liquid can take in bubbles in a nonreactive gas atmosphere,
(iii) the step of adding an active hydrogen component further to the primarily stirred system, and then stirring the system secondarily to prepare a bubble-dispersed urethane composition containing the magnetic filler,
(iv) the step of shaping the bubble-dispersed urethane composition into a desired shape, and then curing the shaped composition to produce a urethane resin foam containing the magnetic filler, and
(v) magnetizing the urethane resin foam to form a magnetic urethane resin foam.

As the method for producing the polyurethane resin foam, known is a chemically foaming method using a reactive type foaming agent such as water. It is, however, preferred to use a mechanically foaming method of stirring, mechanically in a nonreactive gas atmosphere, a mixture containing an isocyanato-group-containing urethane prepolymer, a foam stabilizer, a catalyst and a magnetic filler, and an active hydrogen component, as performed in the steps (ii) and (iii).

The mechanical foaming method is easier regarding the shaping operation thereof than the chemically foaming method, and makes no use of water as a foam stabilizer; thus, the former method gives a strong shaped body which has fine bubbles and is excellent in impact resilience (restorability) and others.

Initially, as performed in the step (i), an isocyanato-group-containing urethane prepolymer is produced from a polyisocyanate component and an active hydrogen component; and as performed in the primary stirring step (ii), the isocyanato-group-containing urethane prepolymer, a foam stabilizer, a catalyst, and a magnetic filler are mixed with each other, and stirred preliminarily to be stirred vigorously in a nonreactive gas atmosphere in such a manner that the liquid can take in bubbles. As performed in the secondary stirring step (iii), the same active hydrogen component as described above is further added thereto and the resultant is vigorously stirred to prepare a bubble-dispersed urethane composition containing the magnetic filler.

Regarding polyurethane resin foams each containing a polyisocyanate component, an active hydrogen component and a catalyst, those skilled in the art know a method of producing an isocyanato-group-containing urethane prepolymer beforehand, and subsequently forming a polyurethane resin foam, as performed in the steps (i) to (iv). Production conditions therefor are appropriately selectable depending on the blend materials.

As to the formation conditions for the step (i), initially, the blend ratio between the polyisocyanate component and the active hydrogen component is selected to set the ratio of isocyanato groups to active hydrogen radicals (the ratio of isocyanato-groups/active-hydrogen-radicals) into the range of 1.5 to 5, preferably 1.7 to 2.3 in the polyisocyanate component. The reaction temperature is preferably from 60 to 120 °C, and the reaction period is preferably from 3 to 8 hours. Furthermore, a urethanization catalyst or an organic catalyst known in the prior art may be used, examples thereof including lead octylate, which is commercially available as a trade name "BTT-24" from Toei Chemical Industry Co., Ltd., and products "TEDAL33" manufactured by Toso Co., Ltd., "NIAX CATALYST A1" manufactured by Momentive Performance Materials Inc., "KAORIZER NO. 1" manufactured by Kao Corp., and "DABCO T-9" manufactured by Air Products and Chemicals, Inc.

An apparatus used in the step (i) may be any apparatus as far as the apparatus is an apparatus in which the above-mentioned materials can be stirred and mixed with each other under conditions as described above to be caused to react with each other. The apparatus may be an apparatus used to produce an ordinary polyurethane.

The method for attaining the primary stirring in the step (ii) may be a method using an ordinary mixer in which a liquid resin and a filler can be mixed with each other. Examples of the mixer include a homogenizer, a dissolver, and a planetary mixer.

In the step (ii), a foam stabilizer is added to materials including the isocyanato-group-containing urethane prepolymer, and then the resultant is stirred (primarily stirred); and in the step (iii), the same active hydrogen component as described above is further added thereto, and the resultant is secondarily stirred, so that bubbles taken in the reaction system do not escape easily. Thus, the foaming can be favorably attained with a good efficiency.

The nonreactive gas in the step (ii) is preferably an incombustible gas. Specific examples thereof include nitrogen, oxygen, carbon dioxide gas, and rare gases such as helium or argon; and any mixed gas of two or more of these gases. It is most preferred to use air from which water has been removed by drying. Also regarding conditions for the primary stirring and the secondary stirring, particularly, conditions for the primary stirring, it is possible to use conditions for producing a urethane foam by an ordinary mechanically forming method.

Thus, the conditions are not particularly limited. Stirring fans or a mixer having stirring fans is used to stir the components vigorously at a rotation number of 1000 rpm to 10000 rpm for 1 to 30 minutes. Examples of such an apparatus include a homogenizer, a dissolver, and a mechanical froth foaming apparatus.

In the step (iv), the method for shaping the bubble-dispersed urethane composition into a desired shape such as a sheet shape is not particularly limited, either. The method may be, for example, a batch-manner molding method of injecting the above-mentioned mixed liquid into a mold subjected to release treatment, and curing the liquid; or a continuously shaping method of supplying the bubble-dispersed urethane composition continuously onto a face plate subjected to release treatment, and curing the composition. Conditions for the curing are not particularly limited, either.

The temperature and period therefor are preferably from 60 °C to 200 °C and from 10 minutes to 24 hours, respectively. If the curing temperature is too high, the resin foam is thermally deteriorated to become poor in mechanical strength. If the curing temperature is too low, the curing of the resin foam becomes insufficient. If the curing period is too long, the resin foam is thermally deteriorated to become poor in mechanical strength. If the curing period is too short, the curing of the resin foam becomes insufficient.

In the step (v), the method for magnetizing the magnetic filler is not particularly limited. The magnetization may be attained, using an ordinarily used magnetizing apparatus, for example, a product "ES-10100-15SH" manufactured by Denshijiki Industry Co., Ltd., or "TM-YS4E" manufactured by Tamakawa Co., Ltd. Usually, a magnetic field having a magnetic flux density of 1 T to 3 T is applied to the filler. After the magnetization, in the step (ii), in which a magnetic-filler-dispersed liquid is produced, the magnetic filler may be added to the liquid for the production. The magnetization is preferably performed in the step (v) from the viewpoint of the handleability of the magnetic filler in middle steps of the present resin-foam-producing method, and others.

As described above, in the present embodiment, the polymer matrix layer 3 is fitted in a compressed state to the battery between adjacent two of the cells 2, as has been illustrated in FIG. 2, or to the battery to be sandwiched between one of the cells 2 and the package 11 in which the cells are held, as has been illustrated in FIG. 3. When the cells 2 swell to deform the polymer matrix layer 3, the present sensor detects a change of the external field which follows the deformation of the polymer matrix layer 3. On the basis of the detection, a deformation of the secondary battery is detected.

The present invention is not limited to the above-mentioned embodiment. The invention can be variously improved or modified as far as the improved or modified embodiment does not depart from the subject matter of the present invention.

The above-mentioned embodiment has demonstrated an example in which the polymer matrix layer 3 is sandwiched between adjacent two of the cells 2 in the gap therebetween (see FIG. 2), and an example in which the layer 3 is sandwiched between one of the cells 2 and the package 11 (see FIG. 3). However, the form that the polymer matrix layer 3 is sandwiched is not limited to these examples. For example, the polymer matrix layer may be sandwiched between a package for a battery module included in a battery pack, and a package for a battery module adjacent to the former module, that is, may be sandwiched between packages for adjacent two out of battery modules in a gap therebetween. This form is useful, particularly, for laminated film type battery modules. Alternatively, the polymer matrix layer may be sandwiched between a package for a battery module and a package for a battery pack in a gap therebetween.

Furthermore, the polymer matrix layer may be located inside a cell, and may be located to be sandwiched, for example, between its positive electrode and separator, between its negative electrode and separator, between its positive electrode and external packaging body, between its negative electrode and external packaging body, or between its separator and external packaging body. This form is useful, particularly, for the case of using this sensor as a deformation detecting sensor for a circular or rectangular tube type cell produced by winding up a positive-electrode/separator/negative-electrode.

The above-mentioned embodiment has demonstrated an example in which a polymer matrix layer containing a filler dispersed therein is made into a monolayer form. The polymer matrix layer may be a monolayer having a structure in which a filler is unevenly dispersed in the thickness direction. When the polymer matrix layer is made into a monolayer form, the method for dispersing the filler unevenly in the layer may be, for example, a method of introducing the filler into an elastomer component, and then allowing the resultant to stand still at room temperature or a predetermined temperature to settle the filler naturally in the component by the weight of the filler. By varying the temperature or period for the standing-still, the uneven dispersion ratio of the filler is adjustable. The filler may be unevenly dispersed by a physical force such as centrifugal force or magnetic force.

The above-mentioned embodiment has demonstrated an example in which a polymer matrix layer containing a filler dispersed therein is made into a monolayer form. However, the polymer matrix layer may have a laminated structure. In such a polymer matrix layer, which has a laminated structure, for example, two polymer matrix layers different from each other in filler concentration may be laminated onto each other, or an elastomer layer containing no filler may be laminated onto a polymer matrix layer containing a filler in any concentration.

When the laminated polymer matrix layer is used, one of its layers and another thereof may be rendered a foamed layer and a non-foamed layer, respectively. The laminated-structure polymer matrix layer may have, for example, a structure in which a polymer matrix layer low in filler concentration or an elastomer layer containing no filler is a foamed layer.

The above-mentioned embodiment has demonstrated an example in which a change of a magnetic field is used. However, the sensor of the present invention may have a structure in which a change of a different external field such as an electric field is used. The structure is, for example, a structure in which a polymer matrix layer contains, as a filler, a conductive filler such as metal particles, carbon black or carbon nanotubes, and a detection unit detects a change of an electric field (change in the resistance and the dielectric constant) as an external field.

In the present invention, a sealing material may be located to such an extent that the flexibility of the polymer matrix layer is not damaged. The sealing material may be a thermoplastic resin, a thermosetting resin or a mixture of the two resins. Examples of the thermoplastic resin include styrene-, polyolefin-, polyurethane-, polyester-, polyamide-, polybutadiene-, polyisoprene-, and fluororesin-type thermoplastic elastomers; and ethylene/ethyl acrylate copolymer, ethylene/vinyl acetate copolymer, polyvinyl chloride, polyvinylidene chloride, chlorinated polyethylene, fluororesin, polyamide, polyethylene, polypropylene, polyethylene terephthalate, polybutylene terephthalate, polystyrene, and polybutadiene.

Examples of the thermosetting resin include diene synthetic rubbers such as polyisoprene rubber, polybutadiene rubber, styrene/butadiene rubber, polychloroprene rubber, and acrylonitrile/butadiene rubber; non-diene rubbers such as ethylene/propylene rubber, ethylene/propylene/diene rubber, butyl rubber, acrylic rubber, polyurethane rubber, fluorine-contained rubber, silicone rubber and epichlorohydrin rubber; and natural rubber, polyurethane resin, silicone resin, and epoxy resin. In the case of using, as the sealing material, the thermoplastic resin, thermosetting resin or mixture thereof, the used resin or mixture is favorably in a film form. Such films may be laminated onto each other. The film may be a film including a metal evaporated film in which a metal is evaporated and deposited onto a metal foil piece such as an aluminum foil piece or a resin or mixture film as described above.

EXAMPLES

Hereinafter, working examples of the present invention will be described. However, the invention is not limited to these examples.

Two or more out of raw materials described below were used to produce each magnetic polyurethane elastomer which was to be a polymer matrix layer.

TDI-80: toluene diisocyanate (COSMONATE T-80, manufactured by Mitsui Chemicals, Inc.; 2,4 bodies = 80 %);

Polyol A: polyoxypropylene glycol obtained by adding propylene oxide to glycerin as an initiator (EX-3030, manufactured by Asahi Glass Co., Ltd.); OHV: 56; the number of functional groups: 3;

Polyol B: polyoxypropylene glycol obtained by adding propylene oxide to propylene glycol as an initiator (EX-2020, manufactured by Asahi Glass Co., Ltd.); OHV: 56; the number of functional groups: 2;

Polyol C: polyether-modified main-chain type reactive silicone (X-22-4272, manufactured by Shin-Etsu Chemical Co., Ltd.); OHV: 56; the number of functional groups: 2;

Polyol D: polyether-modified main-chain type reactive silicone (FM-4411, manufactured by JNC Corp.); OHV: 112; the number of functional groups: 2;

Polyol E: polyether-modified main-chain type reactive silicone (FM-4421, manufactured by JNC Corp.); OHV: 22; the number of functional groups: 2;

Polyol F: polyether-modified main-chain type reactive silicone (FM-4425, manufactured by JNC Corp.); OHV: 11; the number of functional groups: 2;

Polyol G: polyether-modified main-chain type reactive silicone (FM-DA11, manufactured by JNC Corp.); OHV: 112; the number of functional groups: 2;

Polyol H: polyether-modified main-chain type reactive silicone (FM-DA21, manufactured by JNC Corp.); OHV: 22; the number of functional groups: 2;

Polyol I: polyoxypropylene glycol obtained by adding propylene oxide to glycerin as an initiator (EX-1030, manufactured by Asahi Glass Co., Ltd.); OHV: 168; the number of functional groups: 3;

Polyol J: polyoxypropylene glycol obtained by adding propylene oxide to glycerin as an initiator (EX-890MP, manufactured by Asahi Glass Co., Ltd.); OHV: 865; the number of functional groups: 3;

Neodymium based filler: MF-15P (manufactured by Aichi Steel Corp.; average particle diameter: 133 $\mu$m); and
Bismuth octylate: PUCAT 25 (manufactured by Nihon Kagaku Sangyo Co., Ltd.)

As one or more prepolymers, a prepolymer A and/or a prepolymer B shown in Table 1 were used.

Table 1

| Prepolymers | | | A | B |
|---|---|---|---|---|
| | TDI-80 | NCO %=48.3 % | 14.8 | 14.8 |
| | Polyol A | OHV=56 | 85.2 | |
| | Polyol C | OHV=56 | | 85.2 |
| | NCO % | | 3.58 | 3.58 |

Example 1

Into a reactor were charged 85.2 parts by weight of the polyol A, and then the polyol was dehydrated under reduced pressure while stirred. Thereafter, the reactor was purged with nitrogen. Next, 14.8 parts by weight of the TDI-80 were added to the reactor. The reactants were caused to react with each other for 5 hours while the temperature of the inside of the reactor was kept at 80 °C. In this way, an isocyanate-terminated prepolymer A (NCO percentage: 3.58 %) was synthesized.

Next, 31.0 parts by weight of toluene were added to a mixed liquid of 106.5 parts by weight of the polyol C (polyether-modified main-chain type reactive silicone X-22-4272, manufactured by Shin-Etsu Chemical Co., Ltd.; OHV: 56; the number of functional groups: 2) and 0.24 parts by weight of bismuth octylate (PUCAT 25 manufactured by Nihon Kagaku Sangyo Co., Ltd.).

Thereto were added 206.5 parts by weight of the neodymium based filler (MF-15P, manufactured by Aichi Steel Corp.) to prepare a filler-dispersed liquid. Moreover, 100.0 parts by weight of the prepolymer A were dissolved into 31.0 parts by weight of toluene to prepare a prepolymer solution. The above-mentioned filler-dispersed liquid was added to the prepolymer solution. In a planetary centrifugal mixer (manufactured by Thinky Corp.), the liquid and the solution were mixed with each other, and then defoamed.

This reaction liquid was dropwise added to a PET film having a 1.0-mm spacer and subjected to release treatment, and a nip roll was used to adjust the resultant film into a thickness of 1.0 mm. Thereafter, the film was cured at 80 °C for 1 hour to yield a polyurethane elastomer containing the magnetic filler. A magnetizing machine (manufactured by Denshijiki Industry Co., Ltd.) was used to magnetize the resultant polyurethane elastomer at 2.0 T. In this way, a magnetic polyurethane elastomer was yielded. The formulation thereof and producing conditions therefor are shown in Table 2.

Examples 2 to 6, and Comparative Examples 1 and 2

In each of the examples, a magnetic polyurethane resin was yielded in accordance with a formulation in Table 2 under producing conditions therein in the same way as in Example 1.

Measurement of Glass Transition Point (Tg), and Storage Modulus (E'):

A dynamic viscoelasticity measuring instrument (DMA861e, manufactured by Mettler-Toledo International Inc.) was used to measure the glass transition temperature (Tg) and the storage modulus (E') of the resin of each of the examples. The temperature giving a peak top of the tan$\delta$ obtained by the measurement was defined as the glass transition temperature of the resin.
Measuring mode: tension mode,
Frequency: 1 Hz,
Temperature-raising rate: 2.5 °C/min.,
Measuring temperature range: -100 °C to 100 °C, and
Sample shape: a size of 19.5 mm length, 3.0 mm width, and 1.0 mm thickness.

Evaluation of Thickness Change Amount:

Each of the produced magnetic polyurethane elastomers was cut into a size of 10 mm × 30 mm. This cut elastomer was bonded to a 1.44-Ah battery body (size: 90 mm length, 30 mm width, and 4 mm thickness) through a double-sided tape (Double tack tape #5782, manufactured by Sekisui Chemical Co., Ltd.). This battery body was fitted into an aluminum package (thickness: 5 mm) having a partially opened upper surface. Through the opening in the package, a laser displacement meter (LK-G400, manufactured by Keyence Corp.) was used to measure a swell of the battery body. The resultant value was defined as the thickness change amount of the battery body.

Sensor Property Evaluation:

Each of the produced magnetic polyurethane elastomers was cut into a size of 10 mm × 30 mm. This cut elastomer was bonded to a 1.44-Ah battery body (size: 90 mm length, 30 mm width, and 4 mm thickness) through a double-sided tape (Double tack tape #5782, manufactured by Sekisui Chemical Co., Ltd.). This battery body was fitted into an aluminum package (thickness: 5 mm) having a partially opened upper surface. A Hall element (EQ-430L, manufactured by Asahi Kasei Microdevices Corp.) was fitted to the upper surface of the package.

Ordinary-temperature cycles:

This package was put into a thermostat of 20 °C temperature, and allowed to stand still for 120 minutes. Thereafter, the battery body was charged up to 4.3 V at a constant charging current of 1.44 A. After the voltage of the battery reached to 4.3 V, the battery was charged at a constant voltage until the current value was attenuated to 0.07 A. Thereafter, for 10 minutes, the battery was kept in an open circuit state, and then the battery was discharged down to 3.0 V at a constant current of 1.44 A.

This charging and discharging step or cycle was repeated 200 times. After the 200 cycles, measurements were made regarding a change in the thickness of the battery from the initial value thereof, and a change in the magnetic flux density from the initial value thereof. As such sensors are larger in magnetic flux density change, the sensors are higher in sensitivity.

Low Temperature Cycles:

The cycle property of the battery was measured under the same conditions as in the case of the ordinary-temperature cycles except that the temperature of the thermostat was changed to -20 °C.

High Temperature Cycles:

The cycle property of the battery was measured under the same conditions as in the case of the ordinary-temperature cycles except that the temperature of the thermostat was changed to 60 °C.

Table 2

| | | | Example 1 | Example 2 | Example 3 | Example 4 | Example 5 | Example 6 | Comparative Example 1 | Comparative Example 2 |
|---|---|---|---|---|---|---|---|---|---|---|
| Formulation | Prepolymers | Prepolymer A | 100.0 | 100.0 | 50.0 | 100.0 | 100.0 | 15.0 | 100.0 | 100.0 |
| | | Prepolymer B | | | 50.0 | | | 85.0 | | |
| | Curing agents | Polyol A | | | | | | | | |
| | | Polyol B | | 13.4 | | | 54.3 | | | |
| | | Polyol C | 106.5 | | 71.7 | | | 106.5 | | |
| | | Polyol D | | 38.2 | | | | | | |
| | | Polyol E | | | 71.7 | | | | | |
| | | Polyol F | | | | | 154.7 | | | |
| | | Polyol G | | | | 37.8 | | | | |
| | | Polyol H | | | | 61.7 | | | | |
| | | Polyol I | | | | | | | 23.7 | 18.6 |
| | | Polyol J | | | | | | | | 1.0 |
| | Filler | Neodymium based filler (MF-15P) | 206.5 | 151.6 | 243.3 | 199.5 | 309.0 | 206.5 | 123.7 | 118.6 |
| | Catalyst | Bismuth octylate | 0.24 | 0.18 | 0.29 | 0.24 | 0.37 | 0.25 | 0.15 | 0.14 |
| | Solvent | Toluene | 62.0 | 45.5 | 73.0 | 59.9 | 92.7 | 62.0 | 37.1 | 35.9 |
| | NCO index | | 0.80 | 0.95 | 0.85 | 0.85 | 1.00 | 0.80 | 1.20 | 1.20 |
| | Silicon content (Wt%) | | 51.6 | 25.2 | 76.4 | 49.9 | 50.0 | 86.6 | 0.0 | 0.0 |
| | Silicone introduced position | | Main chain | Main chain | Main chain | Side chain | Main chain | Main chain | - | - |

EP 3 163 649 B1

14

| | | | Example 1 | Example 2 | Example 3 | Example 4 | Example 5 | Example 6 | Comparative Example 1 | Comparative Example 2 |
|---|---|---|---|---|---|---|---|---|---|---|
| Physical properties | Tg (°C) | | -45.2 | -34.2 | -55.3 | -46.7 | -48.2 | -62.7 | -3.6 | 6.1 |
| | E'(20 °C/-20 °C) | | 0.54 | 0.27 | 0.64 | 0.47 | 0.46 | 0.72 | 0.04 | 0.08 |
| | E'(20 °C/60 °C) | | 2.9 | 1.9 | 3.8 | 2.2 | 1.5 | 1.8 | 3.2 | 8.9 |
| | E'@20 °C (MPa) | | 1.38 | 2.68 | 0.89 | 1.96 | 0.76 | 1.24 | 3.18 | 9.78 |
| | Thickness change amount (mm) | 20 °C | 0.06 | 0.06 | 0.05 | 0.06 | 0.04 | 0.05 | 0.05 | 0.05 |
| | | -20 °C | 0.17 | 0.16 | 0.18 | 0.17 | 0.15 | 0.16 | 0.14 | 0.15 |
| | | 60 °C | 0.20 | 0.22 | 0.19 | 0.21 | 0.19 | 0.20 | 0.21 | 0.21 |
| | Magnetic flux density change (Gauss) | 20 °C | 5.8 | 6.1 | 5.7 | 5.2 | 4.8 | 4.7 | 4.3 | 2.6 |
| | | -20 °C | 23.4 | 22.3 | 24.7 | 19.7 | 19.2 | 18.6 | 5.1 | 3.4 |
| | | 60 °C | 30.4 | 32.1 | 29.3 | 26.8 | 27.1 | 26.4 | 28.1 | 25.7 |

In Comparative Example 1, the Tg of the magnetic polyurethane elastomer is high (-3.6 °C), and at -20 °C the elastomer is within a glass region to be high in elastic modulus. As a result, it is understood that a change in the magnetic flux density is small so that the sensor is bad in sensitivity. In Comparative Example 2, the ratio E'(20 °C/-20 °C) is low (0.08), the ratio E'(20 °C/60 °C) is high (8.9), and further the storage modulus E'(20 °C) at 20 °C is also high (9.78 MPa).

It is therefore understood that a change in the magnetic flux density is small so that the sensor is bad in sensitivity. In the meantime, it is understood that in each of Examples 1 to 6, a change in the magnetic flux density is large at both of -20 °C and 60 °C, so that the sensitivity of the sensor is small in temperature-dependency.

DESCRIPTION OF REFERENCE SIGNS

1    Battery module
2    Cell
3    Polymer matrix layer
4    Detection unit
6    Container
11   Package

**Claims**

1.  A sensor for detecting a deformation of a sealed secondary battery,
    comprising a polymer matrix layer (3) and a detection unit (4),
    wherein the polymer matrix layer (3) comprises a magnetic filler dispersed in the layer and adapted to cause a change to an external field in accordance with a deformation of the polymer matrix layer (3), and the detection unit (4) is adapted to detect the change of a magnetic field as an external field; and wherein the polymer matrix layer (3) is a polyurethane elastomer with a glass transition temperature (Tg) of -30 °C or lower, wherein the polyurethane elastomer is obtained by causing an active-hydrogen-containing compound to react with an isocyanate component, and the active-hydrogen-containing compound is a compound comprising a silicone-containing polyol.

2.  The sensor for detecting a deformation of a sealed secondary battery according to claim 1,
    wherein the detection unit (4) adapted to detect the change of the external field is selected from a magnetoresistive element, a Hall element, an inductor, an MI element or a flux gate.

3.  The sensor for detecting a deformation of a sealed secondary battery
    according to claim 1 or 2,
    wherein regarding the polymer matrix layer (3), the ratio [E'(20 °C/-20 °C)] of the storage modulus thereof at 20 °C [E'(20 °C)] to that at -20 °C [E'(-20 °C)] is 0.2 or more, and further the ratio [E'(20 °C/60 °C)] of the storage modulus thereof at 20 °C [E'(20 °C)] to that at 60 °C [E'(60 °C)] is 5 or less.

4.  The sensor for detecting a deformation of a sealed secondary battery
    according to any one of claims 1 to 3,
    wherein regarding the polymer matrix layer (3), the storage modulus thereof at 20 °C [E'(20 °C)] is 5.0 MPa or less.

5.  The sensor for detecting a deformation of a sealed secondary battery
    according to any one of claims 1 to 4,
    wherein the silicone-containing polyol has a number-average molecular weight (Mn) of 1000 to 5000, and the content of the silicone-containing polyol in the polymer matrix layer (3) is from 20 to 80 % by weight.

6.  A sealed secondary battery,
    to which a deformation detecting sensor recited in any one of claims 1 to 5 is fitted.

7.  A method for detecting a deformation of a sealed secondary battery,
    wherein a polymer matrix layer (3) is fitted into a cavity which is provided in the sealed secondary battery;
    wherein the polymer matrix layer (3) comprises a magnetic filler dispersed in this layer and adapted to cause a change to a magnetic field as an external field in accordance with a deformation of the polymer matrix layer (3), and the polymer matrix layer (3) is a polyurethane elastomer with a glass transition temperature (Tg) of -30 °C or lower, wherein the polyurethane elastomer is obtained by causing an active-hydrogen-containing compound to react with an isocyanate component, and the active-hydrogen-containing compound is a compound comprising a silicone-containing polyol; and wherein the change of the magnetic field as an external field, which follows the deformation of the polymer matrix layer (3), is detected, and on the basis of the detection, the deformation of the sealed secondary battery is detected.

8. The method for detecting a deformation of a sealed secondary battery according to claim 7, wherein the polymer matrix layer (3) is fitted to the cavity, which is provided in the sealed secondary battery, in a state that the polymer matrix layer (3) is sandwiched in the cavity to be compressed.

**Patentansprüche**

1. Sensor zum Detektieren einer Verformung einer eingekapselten Sekundärbatterie, der eine Polymermatrixschicht (3) und eine Detektionseinheit (4) aufweist, wobei die Polymermatrixschicht (3) einen magnetischen Füllstoff aufweist, der in der Schicht verteilt ist und dazu ausgebildet ist, in Abhängigkeit von einer Verformung der Polymermatrixschicht (3) eine Änderung bei einem äußeren Feld zu bewirken, und wobei die Detektionseinheit (4) dazu ausgebildet ist, die Änderung eines Magnetfelds als ein äußeres Feld zu detektieren; und wobei die Polymermatrixschicht (3) ein Polyurethan-Elastomer mit einer Glasübergangstemperatur (Tg) von -30 °C oder niedriger ist, wobei das Polyurethan-Elastomer dadurch erhalten wird, dass eine aktivwasserstoffhaltige Verbindung mit einer Isocyanatkomponente zur Reaktion gebracht wird, und wobei die aktivwasserstoffhaltige Verbindung eine Verbindung ist, die ein silikonhaltiges Polyol aufweist.

2. Sensor zum Detektieren einer Verformung einer eingekapselten Sekundärbatterie nach Anspruch 1, wobei die Detektionseinheit (4), die dazu ausgebildet ist, die Änderung des äußeren Feldes zu detektieren, aus folgenden Elementen ausgewählt ist: einem magnetoresistiven Element, einem Hall-Element, einem Induktor, einem MI-Element oder einem Fluxgate.

3. Sensor zum Detektieren einer Verformung einer eingekapselten Sekundärbatterie nach Anspruch 1 oder 2, wobei bezüglich der Polymermatrixschicht (3) Folgendes gilt: das Verhältnis [E'(20 °C/-20 °C)] des Speichermoduls hiervon bei 20 °C [E'(20 °C)] zu dem bei -20 °C [E'(-20 °C)] beträgt 0,2 oder mehr, und das Verhältnis [E'(20 °C/60 °C)] des Speichermoduls hiervon bei 20 °C [E'(20 °C)] zu dem bei 60 °C [E'(60 °C)] beträgt 5 oder weniger.

4. Sensor zum Detektieren einer Verformung einer eingekapselten Sekundärbatterie nach einem der Ansprüche 1 bis 3, wobei bezüglich der Polymermatrixschicht (3) gilt, dass der Speichermodul hiervon bei 20 °C [E'(20 °C)] einen Wert von 5,0 MPa oder weniger besitzt.

5. Sensor zum Detektieren einer Verformung einer eingekapselten Sekundärbatterie nach einem der Ansprüche 1 bis 4, wobei das silikonhaltige Polyol ein zahlengemitteltes Molekulargewicht (Mn) von 1000 bis 5000 aufweist und der Gehalt des silikonhaltigen Polyols in der Polymermatrixschicht (3) 20 bis 80 Gew.-% beträgt.

6. Eingekapselte Sekundärbatterie, an der ein Verformungsdetektions-Sensor gemäß einem der Ansprüche 1 bis 5 angebracht.

7. Verfahren zum Detektieren einer Verformung einer eingekapselten Sekundärbatterie, wobei eine Polymermatrixschicht (3) in einen Hohlraum eingesetzt ist, der in der eingekapselten Sekundärbatterie angeordnet ist; wobei die Polymermatrixschicht (3) einen magnetischen Füllstoff aufweist, der in dieser Schicht verteilt ist und dazu ausgebildet ist, eine Änderung eines Magnetfeldes als ein äußeres Feld zu bewirken, und zwar in Abhängigkeit von der Verformung der Polymermatrixschicht (3), und wobei die Polymermatrixschicht (3) ein Polyurethan-Elastomer mit einer Glasübergangstemperatur (Tg) von - 30 °C oder niedriger ist, wobei das Polyurethan-Elastomer dadurch erhalten wird, dass eine aktivwasserstoffhaltige Verbindung mit einer Isocyanatkomponente zur Reaktion gebracht werden, und wobei die aktivwasserstoffhaltige Verbindung eine Verbindung ist, die ein silikonhaltiges Polyol aufweist;

und

wobei die Änderung des Magnetfeldes als ein äußeres Feld detektiert wird, die der Verformung der Polymermatrixschicht (3) folgt, und wobei basierend auf der Detektion die Verformung der eingekapselten Sekundärbatterie detektiert wird.

8. Verfahren zum Detektieren einer Verformung einer eingekapselten Sekundärbatterie nach Anspruch 7, wobei die Polymermatrixschicht (3) in dem in der eingekapselten Sekundärbatterie angeordneten Hohlraum in einem derartigen Zustand untergebracht ist, dass die Polymermatrixschicht (3) in dem zu komprimierenden Hohlraum sandwichartig angeordnet ist.

**Revendications**

1. Capteur pour détecter une déformation d'une batterie secondaire scellée, comprenant une couche de matrice en polymère (3) et une unité de détection (4),
dans lequel la couche de matrice en polymère (3) comprend une charge magnétique dispersée dans la couche et adaptée à provoquer un changement d'un champ externe en accord avec une déformation de la couche de matrice en polymère (3), et l'unité de détection (4) est adaptée à détecter le changement d'un champ magnétique à titre de champ externe ; et
dans lequel la couche de matrice en polymère (3) est un élastomère polyuréthane avec une température de transition vitreuse (Tg) de -30° C ou moins, dans lequel l'élastomère polyuréthane est obtenu en amenant un composé contenant de l'hydrogène actif à réagir avec un composant isocyanate, et le composé contenant de l'hydrogène actif est un composé comprenant un polyol contenant du silicone.

2. Capteur pour détecter une déformation d'une batterie secondaire scellée selon la revendication 1,
dans lequel l'unité de détection (4) adaptée à détecter le changement du champ externe est sélectionnée parmi un élément magnétorésistif, un élément de Hall, un inducteur, un élément MI, ou une grille de flux.

3. Capteur pour détecter une déformation d'une batterie secondaire scellée selon la revendication 1 ou 2,
dans lequel pour ce qui concerne la couche de matrice en polymère (3), le rapport [E'(20°C/-20°C)] du module de stockage de celle-ci à 20°C [E'(20°C)] sur celui à -20°C [E'(-20°C)] est de 0,2 ou plus, et en outre le rapport [E'(20°C/60°C)] du module de stockage de celle-ci à 20°C [E'(20°C)] sur celui à 60°C [E' (60°C)] est de 5 ou moins.

4. Capteur pour détecter une déformation d'une batterie secondaire scellée selon l'une quelconque des revendications 1 à 3,
dans lequel pour ce qui concerne la couche de matrice en polymère (3), le module de stockage de celle-ci à 20°C [E'(20°C)] est de 5,0 MPa ou moins.

5. Capteur pour détecter une déformation d'une batterie secondaire scellée selon l'une quelconque des revendications 1 à 4,
dans lequel le polyol contenant du silicone présente un poids moléculaire moyen numérique (Mn) 2000 à 5000, et la teneur du polyol contenant du silicone dans la couche de matrice en polymère (3) est de 20 à 80 % en poids.

6. Batterie secondaire scellée, sur laquelle est monté un capteur de détection de déformation selon l'une quelconque des revendications 1 à 5.

7. Procédé pour détecter une déformation d'une batterie secondaire scellée, dans lequel une couche de matrice en polymère (3) est assemblée dans une cavité qui est ménagée dans la batterie secondaire scellée ;
dans lequel la couche de matrice en polymère (3) comprend une charge magnétique dispersée dans sa couche et adaptée à provoquer un changement d'un champ magnétique à titre de champ externe en accord avec une déformation de la couche de matrice en polymère (3), et la couche de matrice en polymère (3) est un élastomère polyuréthane avec une température de transition vitreuse (Tg) de -30°C ou moins, dans lequel l'élastomère polyuréthane est obtenu en amenant un composé contenant de l'hydrogène actif à réagir avec un composant isocyanate, et le composé contenant de l'hydrogène actif est un composé comprenant un polyol contenant du silicone ; et
dans lequel le changement du champ magnétique à titre de champ externe, qui essuie la déformation de la couche de matrice en polymère (3), est détecté et, sur la base de la détection, la déformation de la batterie secondaire scellée est détectée.

8. Procédé pour détecter une déformation d'une batterie secondaire scellée selon la revendication 7, dans lequel la couche de matrice en polymère (3) est assemblée dans la cavité, qui est ménagée dans la batterie secondaire scellée, dans un état dans lequel la couche de matrice en polymère (3) est prise en sandwich dans la cavité pour être comprimée.

Fig.1

Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013171697 A
- JP 2006128062 A

- US 2015253207 A1